# EUROPEAN PATENT APPLICATION

(11) **EP 2 189 321 A1**
(43) Date of publication of application: **26.05.2010**
(21) Application number: 09466013.1
(22) Date of filing: 07.08.2009
(51) Int. Cl.: B60L 7/16, B60L 11/18, B60L 1/00

(54) **Traction driven unit connection**

(30) Priority: 22.11.2008 CZ 20080744
(71) Applicant: Vysoka Skola Banska-Technicka Univerzita, 708 33 Ostrava - Poruba (CZ)
(72) Inventor: Smelik, Roman, 708 00 Ostrava-Poruba (CZ); Chlebis, Petr, 711 00 Ostrava-Koblov (CZ); Neborák, Ivo, 735 32 Rychvald (CZ)

(57) **Abstract**

The traction driven AC electric motor (2) is connected to the electric accumulator (1) through at least one inverter (3, 13) for the conversion of DC electric current to AC electric current. In the event that the inverter (3) is bidirectional, it includes at least one primary inlet or outlet (6) connected to the electric accumulator (1), and at least one secondary inlet or outlet (7) which is connected to the traction driven AC electric motor (2). In the event that nonreversible inverters are utilized, the inlet of the primary inverter is connected to the electric accumulator (1) and the outlet of the primary inverter is connected to the traction driven AC electric motor (2) while the inlet of the secondary inverter is connected to the traction driven AC electric motor (2) and the outlet of the second inverter is connected to the electric accumulator (1). An additional advantage in this type of connection is the attachment of at least one diagnostic element (4) which as an option can be installed into at least one inverter (3). In the event that the diagnostic element (4) is not installed into the inverter, the primary inlet is connected to the electric accumulator (1) and the secondary inlet is connected to at least one inverter (3). The diagnostic element additionally includes an outlet (12) connected to a display and/or recording device (5). Another advantage is the attachment of at least one apparatus to the electric accumulator (1) for the purpose of cooling the traction driven AC electric motor and/or at least one inverter (3).

## Description

### Technical Field

This invention is related to the link-up of a traction driving unit, and provides a solution to the infeed of an AC alternating current electric motor utilized in running means of transport from an accumulator; recharging the accumulator with regenerated energy released in the process of applying brakes to the means of transportation.

### Current Technical State

It is a well-known fact that electrically driven means of transportation can be power fed from a trolley wire, electrical accumulator or are linked-up to an electrical current created by a diesel-electric generator.

Means of transport equipped with diesel-electric generators contain AC traction electric motors as drive units which are linked-up either directly to an electric generator or through a converter with a synchronous generator. The electric or synchronous generators are driven by a gas diesel engine. The required output of the diesel-electric system is governed by the output of the gas diesel engine. The disadvantage of this system is that regeneration of energy released in the process of braking is not possible. Another disadvantage is ecologically harmful exhaust fumes.

Means of transport connected to trolley power lines are equipped with asynchronous motors. In the event that the power line is fed with DC direct current, the asynchronous motor is linked with the trolley power line through a direct to alternating current converter. It is possible to return part of the energy released during the braking process in such power linked means of transportation back into the trolley line.

The disadvantage of such equipment is reliance on trolley power line which is not equipped for energy regeneration. The disadvantage of rail line power unit vehicles linked with rail power lines or equipped with diesel-electric generators is that they must be ballasted, i.e. furnished with additional weight elements, for proper wheel-rail grip.

Furthermore, other electrically driven means of transportation fed from electrical accumulators, supplied with traction electric motors as driving units, are also known. In such cases output regulation takes place either by successively attaching individual sections of the electric accumulator, or through a semi-conducting impulse converter. During the braking process the DC motor functions as a generator and the produced electrical energy is inhibited by connecting braking resistors. The disadvantage of this type of connection is that the electrical energy released during the braking process not regenerated but inhibited. Another disadvantage of accumulators linked to means of transportation equipped with DC electrical motors is the short life-time of the electric accumulator and the decreased operational range of the transportation means. The disadvantage of rail vehicles run by DC electrical motors is the additional necessity to utilize sensors and limiting devices which prevent spinning during starting.

### Fundamental Principles of the Invention

The previously mentioned disadvantages of power connecting traction driven units equipped with electrical accumulators and traction driven electrical AC motors are resolved, basically in that traction driven electric AC motors are connected to an electric accumulator through at least one current inverter for the conversion of DC electric current to AC electric current, or the conversion of AC current to DC current. One alternative in principle is that the inverter is bidirectional and includes at least one primary inlet or outlet connected to an electric accumulator, and at least one secondary inlet or outlet connected to a traction driven AC electric motor. Another alternative in principle is that the inlet of the first inverter is connected to an electric accumulator and the outlet of the first inverter is connected to a traction driver AC electric motor, while the inlet of the second inverter is connected to a traction driven AC electric motor and the outlet of the second inverter is connected to an electric accumulator. In accordance with another alternative, the connection further includes at least one diagnostic element which is either integrated with at least one inverter, or it concerns a diagnostic element whose first inlet is connected to an electric accumulator and at least one secondary inlet connected with at least one inverter. The diagnostic element can alternatively include an outlet connected to a display and/or recording device. At least one device for cooling the traction driven AC electric motor and/or for cooling at least one inverter can be additionally connected to the electric accumulator.

The main advantage of the means of transportation containing a connection according to this invention is in its ability to maintain a required speed regardless of the profile of the route. Due to the fact that a traction driven AC electric motor is connected to a fixed source of power, which is an electric accumulator, it can be during short periods of time overloaded by tens and hundreds of percent. The huge weight of the electric accumulators contributes to proper wheel-rail grip of the driving unit of rail vehicles, which consequently doesn't have to be equipped with other weight elements. The utilization of an inverter enables a current with a variable frequency to be fed into the AC electric motor which in the case of rail vehicles minimizes slippage during starts. Another connection advantage according to the invention is the potential of recharging energy released during the braking process. The equipment is capable of operating in the electro-dynamic mode, whereas part of the resistance of the electric accumulator is utilized, and at the same time to a great measure recharging takes place. All of the given advantages will result in more ecological functioning of means of transportation along routes which are not equipped with trolley power lines, and along those routes where either the construction of trolley lines is not possible or economically disadvantageous, not only in rail means of transportation but also in means of road transportation. The benefits of the specified connections in the invention also include lowering of traction driven AC electric motor maintenance requirements, including the whole system of energy transfer. An additional advantage is that the whole equipment can be gas tight sealed and therefore utilized in means of transport operating in an aggressive or explosive environment, e.g. in mine shafts or chemical environment areas. The advantage of connecting equipment for cooling purposes of traction driven AC electric motors and/or inverters for electric accumulators is that this equipment is properly cooled, and even in the event that the rpm speed of a traction driven AC electric motor is insufficient.

### A list of Illustrations in the Technical Diagrams

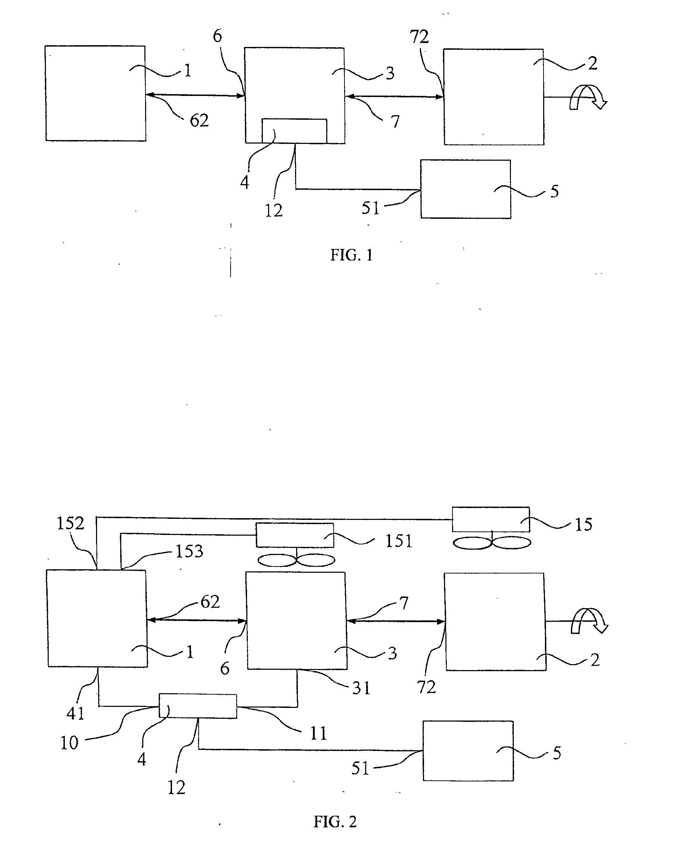

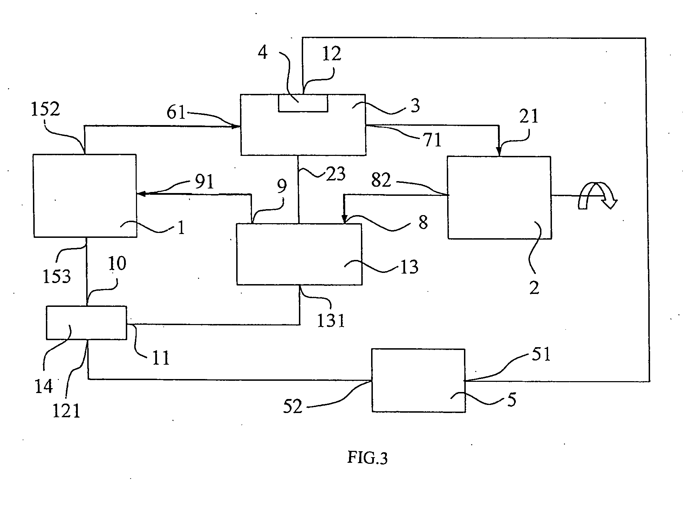

Diagram 1 illustrates the connection according to example 1; diagram 2 illustrates the connection according to example 2, and diagram 3 illustrates the connection according to example3.

### Examples of the Invention Concept

### Example 1

The connection of a traction driven unit in electric locomotives according to example 1 includes an electric accumulator 1 and traction AC electric motor 2, which is asynchronous in compliance with this example. The traction driven AC electric motor 2 is connected to an electric accumulator 1 through a bidirectional inverter 3 which in accordance with the example make up the energy and operational elements, and serve the purpose of converting DC current to AC current, or converting AC current to DC current. The output segment of the bidirectional inverter 3 consists of a bidirectional semi-conducting switching device connected to the circuits and equipment, which together form the operational part. The bidirectional inverter 3 includes the primary inlet or outlet 6, which is connected to the inlet or outlet 62 of the electric accumulator 1 and the secondary inlet or outlet 7 is connected to the inlet or outlet 72 of the traction driven AC electric motor 2. Further connections include a diagnostic element 4, which is integrated with the bidirectional inverter 3. The diagnostic element 4 consists of an inlet 12, which is connected to the inlet 51 of the display and/or recording device 5; in accordance with this example made up of a voltmeter.

The electric accumulator 1 stores the supply of electric energy, from which during starts, driving or requirements to increase energy output DC electric current is fed to the bidirectional inverter 3 through its primary inlet or outlet 6 which in this case serves as an inlet. The DC electric current is converted to AC electric current in the bidirectional inverter 3. The AC electric current is fed into the traction driven AC electric motor 2 of the operational rail locomotive through the secondary inlet or outlet 7, which in this case serves as an outlet. When a decrease of speed or braking is required, AC electric current, generated in the traction driven AC electric motor, is fed to the bidirectional inverter 3 either through the secondary inlet or outlet 7, which in this case functions as an inlet. In this case, conversion from AC electric current to DC electric current takes place in the bidirectional inverter 3. The DC electric current is fed into the electric accumulator 1 through the primary inlet or outlet 6, which in this case serves as an outlet; it is utilized for recharging purposes. The diagnostic element 4 indicates the actual process taking place in the bidirectional inverter 3 and sends a relevant signal to the display and/or recording device 5.

### Example 2

The means of connection in example 2 differs from example1 in that the diagnostic element 4 isn't integrated with the bidirectional inverter 3 but is located aside from it. The diagnostic element 4 contains the primary inlet 10 which is connected with the primary outlet 41 of the electric accumulator 1 and secondary inlet 11, which is connected with the outlet 31 of the bidirectional inverter 3. The connection combination according to this example also includes a device 15 for cooling the traction AC electric motor 2 which is connected to the secondary outlet 152 of the electrical accumulator 1 and device 151 for cooling the bidirectional inverter 3, which is additionally connected to a third outlet 153 of the electric accumulator 1.

The means of connection in example 2 functions in the same manner as the equipment in example 1 with the difference that the diagnostic element 4 analyzes the proper functioning of the electric accumulator 1 and bidirectional inverter 3 on the basis of the electric accumulator voltage at the primary inlet of the diagnostic element 4 and on the basis of variables at the secondary inlet 11 of the diagnostic element 4 which represent the function of the bidirectional inverter 3. The required information is depicted on the display panel of the display and/or recording device 5.

### Example 3

The means of connecting the traction driven unit in example 3 includes an electric accumulator 1, traction driven AC electric motor 2 and two single directional inverters 3-13. The primary single directional inverter 3 at its inlet 61 is connected to the secondary outlet 152 of the electric accumulator 1 and its outlet 71 is linked with the inlet 21 of the traction driven asynchronous electric motor 2. The first diagnostic element 4 supplied with an outlet 12 which is connected with the primary inlet 51 of the display and/or recording device 5 is integrated with the first single directional inverter 3. The second single directional inverter 13 is at its inlet 8 connected with the outlet 82 of the traction driven AC electric motor 2, and its primary outlet 9 with the inlet of the electric accumulator 91. The first inverter 3 is connected with the second inverter 13 through an electrical lead 23. Furthermore, the connection includes a second diagnostic element 14 which at its primary inlet 10 is connected with the third outlet 153 of the electrical accumulator 1, and at its secondary inlet 11 with the secondary outlet 131 of the second single directional inverter 13. The outlet 121 of the second diagnostic element 14 is joined with the secondary inlet 52 of the display and/or recording device 5. The display and/or recording device 5 is a display panel in this example.

The electric accumulator 1 stores the supply of electrical energy from which during starts, driving or requirements to increase energy output, DC electric current is fed to the inlet 61 of the first inverter 3. DC electric current is reconverted into AC electric current in the first inverter, and further led to the inlet 21 of the AC electric motor, serving as a source of its power feed. In the event that a decrease of speed is required or the braking process occurs, regeneration of energy takes place. The AC electric motor generates AC electric current which is lead to the inlet of the second inverter 13. The AC electric current is reconverted in the second inverter into DC electric current which is fed onto the inlet of the electric accumulator 1, serving the purpose of recharging. The second diagnostic element 14 analyzes the proper function of the electric accumulator 1 on the basis of electric voltage valuation at the outlet 153 of the electric accumulator 1, and the function of the second inverter 13 on the basis of variables verifying its proper function. The variables, representing information with regard to the recharging of the electric accumulator 1 fed from the outlet 121 of the second diagnostic element to the display and/or recording device 5.

### Industrial Utilization

This invention can be utilized primarily in rail transportation locomotive drive units, as are rail train switching locomotives, locomotives at rail shunting stations, locomotives passing through conservation regions, and mine shaft towing locomotives, including electric powered vehicles or electric driven manipulator vehicles, wheelchairs for the handicapped, etc.

## Claims

1. The means of connecting the traction driven unit which includes an electric accumulator and traction driven AC electric motor is **characterized in that** the traction driven AC electric motor (2) is connected with the electric accumulator (1) through at least one inverter (3, 13) for the purpose of converting DC electric current to AC electric current, or the conversion of AC electric current to DC electric current.

2. The connection method according to claim 1 **is characterized in that** the inverter (3) is bidirectional and includes at least one primary inlet or outlet (6) which is connected with the electric accumulator (1) and at least one secondary inlet or outlet (7) connected to the traction driven AC electric motor (2).

3. The connection method according to claim 1 **is characterized in that** the inlet (61) of the first inverter (3) is connected to an electric accumulator (1), and the outlet (71) of the first inverter (3) is connected to a traction driven AC electric motor (2) while the inlet (8) of the second inverter (13) is connected to the traction driven AC electric motor (2) and the outlet (9) of the second inverter (13) is connected to the electric accumulator (1).

4. The method of connection according to claim 1 **is characterized in that** the connection method additionally includes at least one diagnostic element (4) which is integrated with at least one inverter (3).

5. The method of connection according to claim 1 **is characterized in that** connection method includes at least one diagnostic element (4, 14) whose first inlet is connected to an electric accumulator (1) and at least one secondary inlet (11) is connected to at least one inverter (3, 13).

6. The method of connection in claim 4 or 5 **is characterized d in that** the diagnostic element (4, 14) includes an outlet (12, 121) connected to a display and/or recording device (5).

7. The method of connection in claim 1 **is characterized in that** the electric accumulator is additionally connected with at least one device (5, 151) for the purpose of cooling the traction driven AC electric motor (2) and /or at least one inverter (3).
